# EUROPÄISCHE PATENTSCHRIFT

(11) **EP 1 062 565 B1**
(45) Veröffentlichungstag und Bekanntmachung des Hinweises auf die Patenterteilung: **23.04.2003**
(21) Anmeldenummer: 99917816.3
(22) Anmeldetag: 25.02.1999
(51) Int. Cl.: G06F 3/00

(54) **VERFAHREN UND VORRICHTUNG ZUM EINLESEN VON PROGRAMMEN IN EIN PROZESSORGESTEUERTES GERÄT**
METHOD AND DEVICE FOR READING PROGRAMMES INTO A PROCESSOR-CONTROLLED DEVICE
PROCEDE ET DISPOSITIF PERMETTANT DE LIRE DES PROGRAMMES DANS UN APPAREIL COMMANDE PAR PROCESSEUR

(30) Priorität: 04.03.1998 DE 19809075
(43) Veröffentlichungstag der Anmeldung: 27.12.2000
(73) Patentinhaber: Bodenseewerk Gerätetechnik GmbH, 88662 Überlingen (DE)
(72) Erfinder: Späth, Jürgen, D-88662 Überlingen (DE); Petersen, Benno, D-88690 Uhldingen (DE)
(74) Vertreter: Weisse, Jürgen, Dipl.-Phys.
(86) Internationale Anmeldenummer: EP9901211
(87) Internationale Veröffentlichungsnummer: WO99045458

(56) Entgegenhaltungen:
- EP-A- 0 457 940
- US-A- 5 805 812

## Beschreibung

### Technisches Gebiet

Die Erfindung betrifft ein Verfahren zum Einlesen von Programmen in ein Gerät das Daten mittels eines Prozessors nach einem in einem Programmspeicher gespeicherten Programm verarbeitet und bei welchem von einem Programmiergerät Programmdaten dem Programmspeicher des zu programmierenden Gerätes als Datenstrom zugeführt werden.

Die Erfindung betrifft weiterhin eine Vorrichtung zum Einlesen von Programmen in ein Gerät, das Daten mittels eines Prozessors nach einem in einem Programmspeicher gespeicherten Programm verarbeitet und bei welcher von einem Programmiergerät Programmdaten dem Programmspeicher des zu programmierenden Gerätes als Datenstrom zuführbar sind.

"Programm" im Sinne der Erfindung kann dabei eine Abfolge von Datenverarbeitungs-Schritten zur Verarbeitung von Daten sein. "Programm" ist aber auch ein Betriebssystem oder die durch Software bestimmte Konfiguration von Hardware-Komponenten des Gerätes.

### Stand der Technik

Es ist bekannt, Programme in prozessorgesteuerte Geräte durch Datenträger zu übertragen, auf denen das Programm gespeichert ist und von denen das Programm durch eine Leseeinheit in den Datenspeicher des Gerätes eingelesen wird. Bei vielen prozessorgesteuerten Geräten kann im Gerät selbst kein Laufwerk für einen Datenträger mit Leseeinheit vorgesehen werden. Das Programm muß dann über ein Kabel von einem Programmiergerät, z.B. einem Rechner, übertragen werden.

Eine andere Möglichkeit besteht darin, in dem Gerät Programmodule oder Programmspeicher auszutauschen.

In allen diesen Fällen ist ein mechanischer Eingriff in das prozessorgesteuerte Gerät erforderlich. Es müssen Stecker eines Kabels eingesteckt oder Bauteile ersetzt werden. Das ist umständlich und macht es u.U. erforderlich, das Gerät auszubauen und/oder zu öffnen. Steckerbuchsen erfordern Raum, der häufig nicht zur Verfügung steht. Durch den mechanischen Eingriff können Schäden durch elektrostatische Entladungen (EDS = Electrostatic Discharge) entstehen. Die Übertragung der Programmdaten kann durch äußere elektrische oder elektromagnetische Einflüsse gestört werden. Schutzvorrichtungen, z.B. gegen EDS, müssen für die Übertragung der Programmdaten entfernt werden.

Es ist bekannt, Daten zwischen Geräten, z.B. zwischen PCs, kontaktlos mittels eines Lichtsenders und und eines Lichtempfängers zu übertragen. Bei diesen Daten handelt es sich um zu verarbeitende oder zu speichernde Informationen, nicht um Programmdaten, die das Programm zu Verarbeitung solcher Informationen durch den Prozessor bestimmen. Diese Daten werden in einen Arbeitsspeicher eingeschrieben, nicht in den Programmspeicher des Gerätes.

Programme der oben definierten Art werden nach dem Stand der Technik über Datenträger und/oder Kabel oder durch Austausch von Bauteilen geändert.

Es wurde offenbar ein Unterschied gemacht zwischen den "flüchtigen" zu verarbeitenden Daten, z.B. zu verarbeitenden Meßwerten, und den "festliegenden" Programmdaten, die den Ablauf der Datenverarbeitung bestimmen. Die letzteren wurden "konventionell" über Kabel o. dergl. eingegeben, was wohl als die sicherste Methode angesehen wurde.

Durch die EP-A-0 457 940 ist bekannt, in eine elektronische, mit einem Prozessor versehene Vorrichtung mittels einer Programmiervorrichtung "Updates" einzugeben, die Vorrichtung also zu reprogrammieren. Es wird dabei auch vorgeschlagen, die Übertragung der Programme drahtlos und unter Verwendung von infrarotem Licht durchzuführen.

Bei dieser Art von Programmierung besteht die Gefahr von Übermittlungsfehlern und damit von Fehlprogrammierung.

### Offenbarung der Erfindung

Der Erfindung liegt die Aufgabe zugrunde, bei einem Verfahren und einer Vorrichtung zum Einlesen von Programmdaten der eingangs genannten Art Fehler, die durch mechanische Verbindungen zwischen Programmiergerät und zu programmierendem Gerät, durch mechanische Eingriffe in das zu programmierende Gerät oder durch Fehler bei einer drahtlosen Datenübertragung auftreten können, zu vermeiden.

Erfindungsgemäß wird diese Aufgabe durch ein Verfahren gelöst mit den Verfahrensschritten:
(a) Ansteuern eines Lichtsenders nach Maßgabe der Programmdaten, so daß der Lichtsender digitale Lichtsignale nach Maßgabe der Programmdaten erzeugt,
(b) Empfangen der Lichtsignale mit einem an dem zu programmierenden Gerät fest installierten Lichtempfängers,
(c) Aufschalten der Signale des Lichtempfängers des zu programmierenden Gerätes auf den Programmspeicher dieses Gerätes, wobei
(d) Informationen zwischen Programmiergerät und zu programmierendem Gerät in beiden Richtungen über Lichtsignale übermittelt werden und.
(e) die Übermittlung der Programmdaten im Rahmen eines Dialogs zwischen dem Programmiergerät und dem zu programmierenden Gerät erfolgt,
   bei welchem erfindungsgemäß
(f) nach Übermittlung der Programmdaten von dem Programmiergerät zu dem zu programmierenden Gerät die so übermittelten und im Programmspeicher des zu programmierenden Gerätes abgelegten Programmdaten zur Verifizierung an das Programmiergerät über Lichtsignale zurückübermittelt werden.

Eine Vorrichtung zur Durchführung dieses Verfahrens enthält
(a) einen Lichtsender und Mittel zum digitalen Ansteuern des Lichtsenders mit den von dem Programmiergerät gelieferten Programmdaten und Erzeugen entsprechender, gepulster infraroter Lichtsignale,
(b) einen an dem zu probierenden Gerät fest installierten Lichtempfänger, der von den Lichtsignalen beaufschlagt ist zur Erzeugung von Programmdaten aus gepulsten Signalen des Lichtempfängers nach einem dem Lichtsender und dem Lichtempfänger vorgegebenen Protokoll, und
(c) Mitteln zum Einlesen der so erhaltenen Programmdaten in den Programmspeicher des zu programmierenden Gerätes, wobei
(d) sowohl das Programmiergerät als auch das zu programmierende Gerät jeweils eine Lichtsender- und Lichtempfängereinheit aufweisen, so daß die Daten im Rahmen eines Dialogs übertragbar sind,
(e) das zu programmierende Gerät Mittel enthält, durch welche nach Übermittlung der Programmdaten von dem Programmiergerät zu dem zu programmierenden Gerät die so übermittelten und im Programmspeicher des zu programmierenden Gerätes abgelegten Programmdaten über die Lichtsendereinheit des zu programmierenden Gerätes und die Lichtempfängereinheit des Programmiergerätes zu dem Programmiergerät zurückübermittelbar sind und
(f) das Programmiergerät Verifizierungsmittel zur Verifizierung des so dem zu programmierenden Gerät übermittelten und von diesem zurückübermittelten Programms enthält.

Nach der Erfindung erfolgt daher das Laden des Programms, also die Eingabe der. Programmdaten in den Programmspeicher kontaktlos über Lichtsender und Lichtempfänger, wobei der Lichtempfänger an dem Gerät fest installiert ist Auf diese Weise sind keine mechanischen Eingriffe in das Gerät erforderlich. Schäden durch elektrostatische Entladung können nicht auftreten. Der Lichtempfänger hat nur geringen Raumbedarf. Eine Störung durch elektromagnetische Einflüsse tritt nicht ein. Durch das Zurückübermitteln der Programmdaten und Verifizierung derselben wird sichergestellt, daß sich bei der drahtlosen Übermittlung keine Programmfehler einschleichen können oder solche Programmfehler entdeckt werden.

Es hat sich gezeigt, daß auf diese Weise auch Programme mit hinreichender Sicherheit kontaktlos in den Programmspeicher geladen werden können. Unbeabsichtigte Änderungen des Programmes, z.B. bei der Eingabe von zu verarbeitenden Daten über Lichtsender und -emfänger, werden durch den Übertragungsmodus verhindert.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig.1: zeigt ein Beispiel einer Vorrichtung zum Laden von Programmen in Geräte, die hier von Modulen gebildet sind, die in einem Kabinett angeordnet sind.
- Fig.2: ist eine schematisches Blockdiagramms eines Kommunikationsaufbaus
- Fig.3: zeigt ein Anwendungsbeispiel einer Programmiervorrichtung und des Programmierverfahrens.
- Fig.4: ist eine andere Darstellung der Vorrichtung von Fig. 1

### Bevorzugte Ausführung der Erfindung

Mit dem Bezugszeichen 10 ist ein Programmiergerät bezeichnet. Dieses kann aus einem herkömmlichen PC bestehen. Die wesentlichen Grundbestandteile eines PCs für die Funktion als Programmiergerät sind ein Rechnergehäuse 12, einer Tastatur 14, ein Monitor 16 und einer Sende- und Empfangseinheit 18. In dem Rechnergehäuse 12 ist ein in dieser Darstellung nicht gezeigter Rechner mit dem Prozessor und diversen Schnittstellen angeordnet. Über eine beispielsweise serielle Schnittstelle ist der PC mit einer externen Inframtsende- und Infrarotempfängereinheit 20 über ein Kabel 22 verbunden. Die serielle Schnittstelle wird durch den Prozessor des Rechners gesteuert. Über dieses serielle Schnittstelle wird der Datenstrom sequentiell gesendet Es sind aber auch parallele Schnittstellen oder andere Datenbussysteme mit entsprechender Datenübertragung denkbar. Daten werden durch den PC digital verarbeitet. Die Programmdaten werden daher auch als digital codierte Datenströme zu der Infrarotsender- und Infrarotempfängereinheit 20 geleitet und von dieser als gepulste Lichtströme ausgesandt.

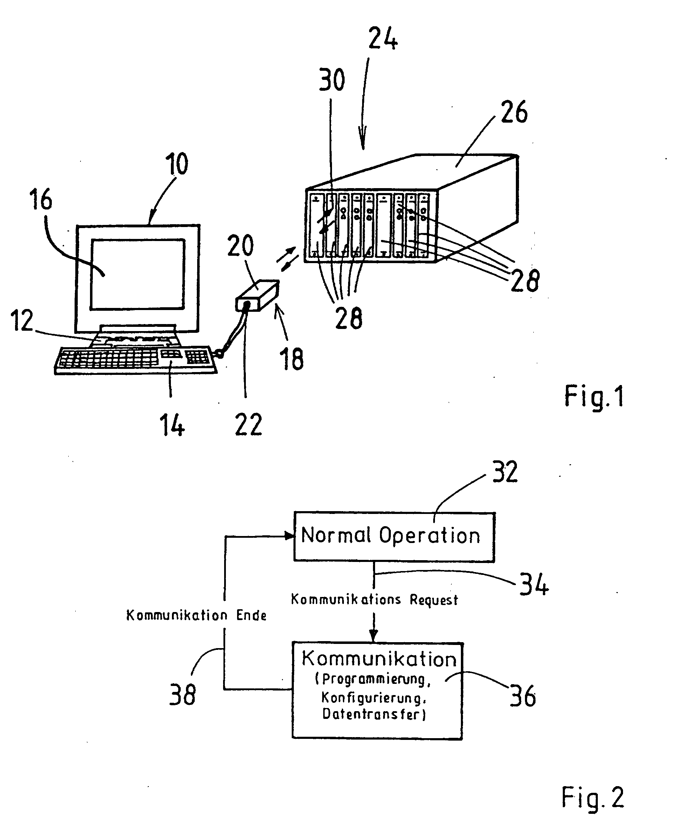

Eine Arbeitseinheit 24 besteht aus einem Kabinett 26 mit Modulen in Form von Gehäuseeinschüben 28. Diese Module stellen die zu programmierenden Geräte dar. Die Gehäuseeinschübe 18 sitzen nebeneinander in dem Kabinett 26. Jedes Modul ist nach vorn durch eine Frontplatte 29 abgedeckt. In den Gehäuseeinschüben 28 ist jeweils eine in der Darstellung von Fig.1 nicht gezeigte prozessorgesteuerte Steuereinheit vorgesehen. Die prozessorgesteuerte Steuereinheit ist mit jeweils einer Infrarotsende- und Infrarotempfangseinheit 30 gekoppelt. In diesem Ausführungsbeispiel ist die Infrarotsende- und Infrarotempfangseinheit 30 integraler Bestandteil des zu programmierenden Gerätes, d.h. des Gehäuseeinschubs 18 und sitzt mit Sender und Empfänger fest auf der Froniplatte 29.

In Fig. 2 wird schematisch als Blockdiagramm ein Kommunikationsaufbau dargestellt. Sowohl das Programmiergerät 10, als auch die Arbeitseinheit 24 fragen ihren Infrarotempfänger in bestimmten Zeitabständen ab, ob eine Kommunikation mit dem jeweils anderen Gerät erfolgen soll. Der Normalzustand wird durch Block 32 symbolisiert. Der Pfeil 34 deutet die Abfrage an das jeweils andere Gerät an. Wird die Anfrage des jeweils anderen Gerätes bestätigt, so kann der Datenaustausch erfolgen. Der Datenaustausch ist durch Block 36 symbolisiert. Werden keine Daten zwischen Programmiergerät 10 und Arbeitseinheit 24 mehr ausgetauscht, so wird dem jeweils anderen Gerät das Kommunikationsende signalisiert. Dies zeigt der Pfeil 38, der andeutet, daß die Geräte wieder in den Normalzustand zurückgeführt werden.

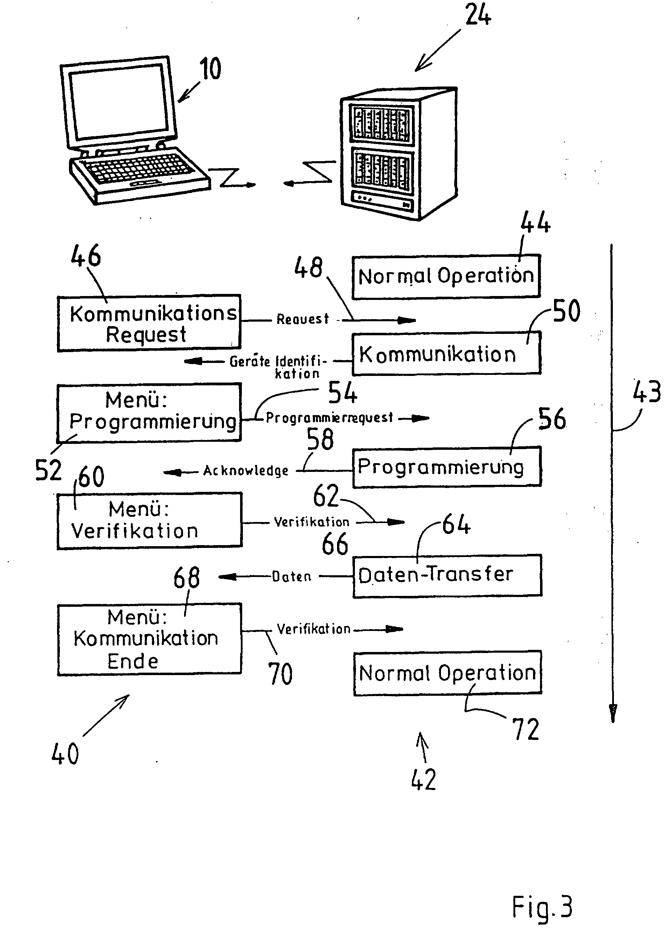

Fig. 3 stellt den Dialog etwas detaillierter dar. Sowohl das Programmiergerät 10 als auch die Arbeitseinheit 24 weisen jeweils eine integrierte Infrarotsende- und Infrarotempfangseinheit 20 bzw. 30 auf. Die linke Spalte 40 des Arbeitsablaufes ist der Teil, den das Programmiergerät 10 übernimmt. Die rechte Spalte 42 ist der Teil des Arbeitsablaufs, den die Arbeitseinheit 24 durchführt. Die Richtung des zeitlichen Arbeitsablaufes wird durch Pfeil 43 bestimmt. Die Arbeitseinheit 24 ist zunächst im Normalzustand, welcher durch Block 44 dargestellt ist. In Block 46 fragt das Programmiergerät 10 zunächst bei der Arbeitseinheit 24 an, ob Daten ausgetauscht werden können. Dies wird durch Pfeil 48 symbolisiert. Block 50 stellt die erste Kommunikation dar, in der sich die Arbeitseinheit 24 gegenüber dem Programmiergerät identifiziert. Über eine Benutzerschnittstelle des Programmiergeräts 10, dargestellt durch Block 52, wird beispielsweise über einen Menü die Programmierung eingestellt und der Arbeitseinheit 24 signalisiert. Dies wird mit Pfeil 54 angedeutet. Die Arbeitseinheit 24 ist nun bereit. Die Programmierung wird durchgeführt, Block 56. Die Bestätigung gegenüber der Programmiergerät 10 erfolgt über Pfeil 58. Anschließend wird in dem Menü des Programmiergeräts 10 "Programmierung verifizieren" ausgewählt, symbolisiert durch Block 60. Das Programmiergerät sendet entsprechende Signale 62 zur Arbeitseinheit 24. Diese schaltet auf Datentransfer - Block 64 - um und sendet den Datenstrom, Pfeil 66, zum Programmiergerät 10. Das Programmiergerät 10 überprüft die Daten. In Block 68 wird aus dem Menü des Programmiergeräts 10 "Kommunikationsende" ausgewählt. Die Bestätigung wird zur Arbeitseinheit 24 gesandt - Pfeil 70. Die Arbeitseinheit geht nun wieder in ihren Normalzustand über, Block 72.

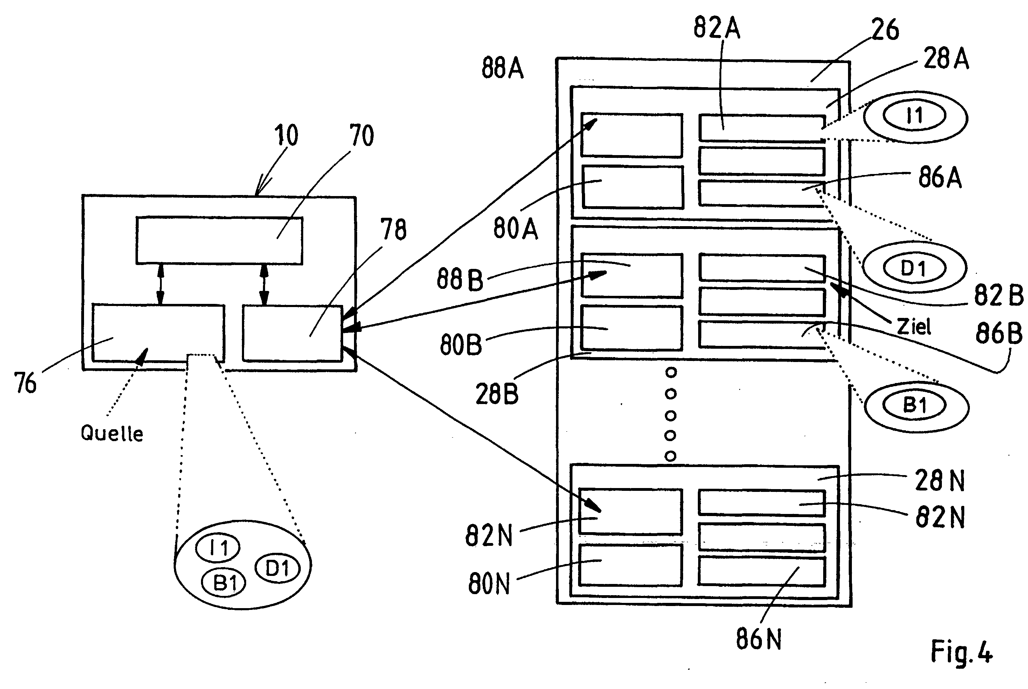

Fig.4 ist eine etwas andere Darstellung der Anordnung von Fig.1.

Das Programmiergerät 10 enthält einen Prozessor 74 und einen Speicher 76, in welchem die in das zu programmierende Gerät einzuschreibenden Programme gespeichert sind. Das Programmiergerät 10 enthält weiterhin eine Schnittstelle 78 für die Datenübertragung. Die Schnittstelle 78 schließt die Infrarotsende- und Infrarotempfängereinheit 20 ein. Im Rahmen des im Zusammenhang mit Fig.3 beschriebenen Dialogs liest der Prozessor 74 die Programmdaten aus dem Speicher 76 aus und steuert die Schnittstelle an, so daß die Infrarotsende- und Infrarotempfängereinheit 20 ein gepulstes, infrarotes Lichtbündel entsprechend den zu übertragenden Programmdaten aussendet.

Das zu programmierende Gerät, oder vielmehr die zu programmierenden Geräte, sind Module, die als Gehäuseeinschübe 28A, 28B ... 28N in dem quaderförmigen Kabinett 26 sitzen. Jeder Gehäuseeinschub 28A, 28B ... 28N enthält einen Prozessor 80A, 80B ... 80N, einen Programmspeicher 82A, 82B, ... 82N; einen Datenspeicher 84A, 84B, ... 84N und ein Betriebssystem 86A, 86B, ... 86N. An jedem Gehäuseeischub 28A, 28B, ... 28N ist eine Schnittstelle 88A, 88B, ... 88N für die Datenübertragung vorgesehen. Diese Schnittstelle schließt die an der Frontplatte jedes der Gehäuseeinschübe 28A, 28B, ... 28N angebrachte Infrarotsender- und Infrarotempfängereinheit 30 ein.

Das Programmiergerät 10 kann nun mit entsprechender Codierung verschiedene Arten von Programmdaten liefern und über die Schnittstelle 78 und die Infrarotsender- und Infrarotempfängereinheit als infrarote Lichtsignale auf die Infrarotsender- und Infrarotempfängereinheit 30 der zu programmierenden Geräte übermitteln. Das ist in Fig.4 durch die Symbole B1 und D1 für jeweils ein Betriebssystem und I1 für ein Datenverarbeitungs-Programm dargestellt. Die Betriebssystem-Programmdaten D1 und B1 sind auf die jeweiligen Betriebssysteme 86A bzw. 86B aufgeschaltet. Die Programmdaten des Datenverarbeitungs-Programmes I1 sind auf den Programmspeicher 82A aufgeschaltet. Die Datenübertragung erfolgt jeweils in einem Dialog der im Zusammenhang mit Fig.3 beschriebenen Art.

Durch das Programmiergerät 10 können parallel mehrere der Gehäuseeinschübe 28 programmiert werden. Es ist aber auch möglich, einzelne Gehäuseeinschübe zu programmieren oder die Gehäuseeinschübe nacheinander zu programmieren.

## Patentansprüche

1. Verfahren zum Einlesen von Programmen in ein Gerät, das Daten mittels eines Prozessors nach einem in einem Programmspeicher gespeicherten Programm verarbeitet und bei welchem von einem Programmiergerät Programmdaten dem Programmspeicher des zu programmierenden Gerätes als Datenstrom zugeführt werden, **mit den Verfahrensschritten**
(a) Ansteuern eines Lichtsenders nach Maßgabe der Programmdaten, so daß der Lichtsender digitale Lichtsignale nach Maßgabe der Programmdaten erzeugt,
(b) Empfangen der Lichtsignale mit einem an dem zu programmierenden Gerät fest installierten Lichtempfängers,
(c) Aufschalten der Signale des Lichtempfängers des zu programmierenden Gerätes auf den Programmspeicher dieses Gerätes, wobei
(d) Informationen zwischen Programmiergerät und zu programmierendem Gerät in beiden Richtungen über Lichtsignale Übermittelt werden und
(e) die Übermittlung der Programmdaten im Rahmen eines Dialogs zwischen dem Programmiergerät und dem zu programmierenden Gerät erfolgt.
**dadurch gekennzeichnet, daß**
(f) nach Übermittlung der Programmdaten von dem Programmiergerät zu dem zu programmierenden Gerät die so übermittelten und im Programmspeicher des zu programmierenden Gerätes abgelegten Programmdaten zur Verifizierung an das Programmiergerät über Lichtsignale zurückübermittelt werden.

2. Verfahren nach Anspruch 1, **dadurch gekennzeichnet, daß** die Programmdaten auf den Lichtsender und von diesem auf den Lichtempfänger seriell nach einem dem Lichtsender und dem Lichtempfänger vorgegebenen Protokoll übertragen werden.

3. Vorrichtung zum Einlesen von Programmen in ein Gerät (28), das Daten mittels eines Prozessors (80A, 80B..80N) nach einem in einem Programmspeicher (82A,82B...82N) gespeicherten Programm verarbeitet und bei welcher von einem Programmiergerät (10) Programmdaten dem Programmspeicher (82A,82B...82N) des zu programmierenden Gerätes (28A,28B,...28N) als Datenstrom zuführbar sind, die Vorrichtung bestehend aus;
(a) einem Lichtsender und Mittel zum digitalen Ansteuern des Lichtsenders mit den von dem Programmiergerät (10) gelieferten Programmdaten und Erzeugen entsprechender, gepulster infraroter Lichtsignale,
(b) einem an dem zu programmierenden Gerät (28A,28B,...28N) fest installierten Lichtempfänger (30), der von den Lichtsignalen beaufschlagt ist zur Erzeugung von Programmdaten aus gepulsten Signalen des Lichtempfängers (30) nach einem dem Lichtsender (20) und dem Lichtempfänger (30) vorgegebenen Protokoll, und
(c) Mitteln zum Einlesen der so erhaltenen Programmdaten in den Programmspeicher (82A,82B...82N) des zu programmierenden Gerätes (28A,28B,...28N), wobei
(d) sowohl das Programmiergerät (10) als auch das zu programmierende Gerät (28A,28B,...28N) jeweils eine Lichtsender- und Lichtempfängereinheit (20;30) aufweisen, so daß die Daten im Rahmen eines Dialogs übertragbar sind,
**dadurch gekennzeichnet, daß**
(e) das zu programmierende Gerät (28A,28B,...28N) Mittel enthält, durch welche nach Übermittlung der Programmdaten von dem Programmiergerät (10) zu dem zu programmierenden Gerät (28A,28B,...28N) die so übermittelten und im Programmspeicher des zu programmierenden Gerätes (28A,28B,...28N) abgelegten Programmdaten über die Lichtsendereinheit (30) des zu programmierenden Gerätes (28A,28B,...28N) und die Lichtempfängereinheit (20) des Programmiergerätes (10) zu dem Programmiergerät (10) zurückübermittelbar sind und
(f) das Programmiergerät (10) Verifizierungsmittel zur Verifizierung des so dem zu programmierenden Gerät (28A,28B,...28N) übermittelten und von diesem zurückübermittelten Programms enthält

4. Vorrichtung nach Anspruch 3, **dadurch gekennzeichnet, daß**
(a) das zu programmierende Gerät (28A,28B,...28N) eines von mehreren Modulen ist, die neben- oder übereinander in einem Kabinett (26) sitzen, und
(b) der Lichtempfänger (30) an der Frontseite des Moduls angebracht und über eine Schnittstelle (88A,88B,...88N) mit der Programmspeicher (82A,82B,...82N) des Moduls verbunden ist.

## Claims

1. Method of reading in programs into a device which processes data by means of a processor in accordance with a program stored in a program memory and wherein program data from a programming device are supplied to the program memory of the device to be programmed as a stream of data, with the steps of
(a) energising a light transmitter in accordance with the program data, whereby the light transmitter generates digital light signals in accordance with the program data,
(b) receiving the light signals by means of a light receiver fixedly installed in the device to be programmed,
(c) applying the signals of the light receiver of the device to be programmed to the program memory of this device,
(d) information between programming device and device to be programmed being transmitted through light signals in both directions, and
(e) the transmittal of the program data taking place within the framework of a dialogue between the programming device and the device to be programmed,
**characterised in that**
(f) after the transmittal of the program data from the programming device to the device to be programmed, the program data thus transmitted and stored in the program memory of the device to be programmed are re-transmitted to the programming device for verification.

2. Method as claimed in claim 1, **characterised in that** the program data are transmitted to the light transmitter and, therefrom, to the light receiver serially in accordance with a protocol preset in the light transmitter and in the light receiver.

3. Device for reading-in programs into a device (28) which processes data by means of a processor (80A, 80B ... 80N) in accordance with a program stored in a program memory (82A,82B, ... 82N) and wherein program data from a programming device (10) can be supplied to the program memory (82A,82B, ... 82N) of the device (28A,28B ... 28N) to be programmed as a stream of data, the device consisting of:
(a) a light transmitter sand means for digitally energising the light transmitter with the program data and for generating corresponding pulsed, infrared light signals,
(b) a light receiver (30) fixedly installed at the device (28A,28B ... 28N) to be programmed, the light receiver being exposed to the light signals, for generating program data from pulsed signals of the light receiver (30) in accordance with a protocol preset in the light transmitter (20) and light receiver (30),
(c) means for reading-in the program data thus obtained into the program memory (82A,82B, ... 82N) of the device (28A,28B ... 28N) to be programmed,
(d) both the programming device (10) and the device (28A,28B ... 28N) to be programmed having a light transmitter and light receiver unit (20;30) , whereby data can be transmitted within the framework of a dialogue,
**characterised in that**
(e) the device (28A,28B ... 28N) to be programmed comprises means for retransmitting, after transmittal of the program data from the programming device (10) to the device (28A,28B ... 28N) to be programmed, the progam data thus transmitted and stored in the program memory of the device (28A,28B ... 28N) to be programmed, through the light transmitter unit (30) of the device (28A,28B ... 28N) to be programmed and the light receiver unit (20) of the programming device (30), back to the programming device (10), and
(f) the programming device (10) comprises verifying means for verifying the program thus transmitted to the device (28A,28B ... 28N) to be programmed and re-transmitted by this device.

4. Device as claimed in claim 3, **characterised in that**
(a) the device (28A,28B ... 28N) to be programmed is one of a plurality of modules, which are mounted side-by-side in a cabinet, and
(b) the light receivers (30) are provided on the front side of the modules and are connected with the program memory (82A,82B, ... 82N) of the module through an interface (88A,88B, ... 88N).

## Revendications

1. Procédé de lecture de programmes dans un appareil qui traite des données au moyen d'un processeur d'après un programme mémorisé dans une mémoire de programme et pour lequel des données de programme sont amenées, en tant que courant de données, par un programmateur à la mémoire de programme de l'appareil devant être programmé, **comprenant les étapes de procédé de**
(a) commande d'un émetteur de lumière en fonction des données de programme de sorte, que l'émetteur de lumière génère des signaux de lumière numériques en fonction des données de programme,
(b) réception des signaux de lumière à l'aide d'un récepteur de lumière installé fixement sur l'appareil devant être programmé,
(c) application des signaux du récepteur de lumière de l'appareil devant être programmé à la mémoire de programme de cet appareil,
(d) des informations étant diffusées entre le programmateur et l'appareil devant être programmé dans les deux sens par l'intermédiaire de signaux de lumière et
(e) la diffusion des données de programme s'effectuant dans le cadre d'un dialogue entre le programmateur et l'appareil devant être programmé,
**caractérisé en ce que**
(f) après la diffusion des données de programme par le programmateur à l'appareil devant être programmé, les données de programme ainsi diffusées et déposées dans la mémoire de programme de l'appareil devant être programmé sont rediffusées par des signaux de lumière afin d'être vérifiées dans le programmateur.

2. Procédé selon la revendication 1, **caractérisé en ce que** les données de programme sont transmises en série à l'émetteur de lumière et par celui-ci au récepteur de lumière d'après un protocole donné préalablement à l'émetteur de lumière et au récepteur de lumière.

3. Dispositif de lecture de programmes dans un appareil (28) qui traite des données au moyen d'un processeur (80A, 80B, ... 80N) d'après un programme mémorisé dans une mémoire de programme (82A, 82B, ... 82N) et pour lequel des données de programme sont susceptibles d'être amenées, en tant que courant de données, par le programmateur (10) à la mémoire de programme (82A, 82B, ... 82N) de l'appareil devant être programmé (28A, 28B, ... 28N), le dispositif se composant de
(a) un émetteur de lumière et de moyens de commande numérique de l'émetteur de lumière avec les données de programme livrées par le programmateur (10) et de génération des signaux de lumière correspondants infrarouges pulsés,
(b) un récepteur de lumière (30) installé fixement sur l'appareil devant être programmé (28A, 28B, ... 28N) auquel sont appliqués les signaux de lumière afin de générer des données de programme à partir de signaux pulsés du récepteur de lumière (30) d'après un protocole donné préalablement à l'émetteur de lumière (20) et au récepteur de lumière (30), et
(c) de moyens de lecture des données de programme ainsi obtenues dans la mémoire de programme (82A, 82B, ... 82N) de l'appareil devant être programmé (28A, 28B, ... 28N),
(d) aussi bien le programmateur (10) que l'appareil devant être programmé (28A, 28B, ... 28N) présentant à chaque fois une unité de récepteur de lumière et d'émetteur de lumière (20;30) de sorte que les données sont susceptibles d'être transmises dans le cadre d'un dialogue,
**caractérisé en ce que**
(e) l'appareil devant être programmé (28A, 28B, ... 28N) comprend des moyens permettant de rediffuser au programmateur (10), par l'intermédiaire de l'unité d'émission de lumière (30) de l'appareil devant être programmé (28A, 28B, ... 28N) et de l'unité de réception de lumière (20) du programmateur (10), les données de programme ainsi diffusées et déposées dans la mémoire de programme de l'appareil devant être programmé (28A, 28B, ... 28N) après que les données de programme ont été diffusées par le programmateur (10) à l'appareil devant être programmé (28A, 28B, ... 28N) et
(f) le programmateur (10) comprenant des moyens de vérification destinés à vérifier le programme ainsi diffusé à l'appareil devant être programmé (28A, 28B, ... 28N) et rediffusé par celui-ci.

4. Dispositif selon la revendication 3, **caractérisé en ce que**
(a) l'appareil devant être programmé (28A, 28B, ... 28N) est l'un des quelques modules se trouvant dans un boîtier (26) les uns à côté des autres ou les uns au-dessus des autres, et
(b) le récepteur de lumière (30) est placé sur la plaque de devant du module et est relié à la mémoire de programme (82A, 82B, ... 82N) du module par l'intermédiaire d'une interface (88A, 88B, ... 88N).
